# EUROPEAN PATENT APPLICATION

(11) **EP 4 421 923 A1**
(43) Date of publication of application: **28.08.2024**
(21) Application number: 23157916.0
(22) Date of filing: 22.02.2023
(51) Int. Cl.: H01M 8/04, B01D 63/08, H01M 8/02, H01M 8/04119

(54) **STACK PLATE AND STACK PLATE DEVICE FOR A HUMIDIFIER**

(71) Applicant: MANN+HUMMEL GmbH, 71636 Ludwigsburg (DE)
(72) Inventor: VOCA, Oliver, 74360 Ilsfeld (DE); TESCHNER, Dr. Matthias, 71636 Ludwigsburg (DE); ZELTWANGER, Tom, 70439 Stuttgart (DE); FRANK, Michael, 71679 Asperg (DE)
(74) Representative: Mann + Hummel Intellectual Property

(57) **Abstract**

The invention relates to a stack plate device (400) for a humidifier (1000), in particular for a fuel cell system, the stack plate device (400) including a plurality of first and second stack plates (100, 200) being stacked one on top of each other alternately in a stacking direction (500), with each stack plate (100, 200) comprising a peripheral frame (120, 220), wherein at least first and second groups of flow channels (410, 420) are formed in the stacked stack plates (100, 200), the flow channels (410, 420) being formed transversely to one another and being separated by semi-permeable layers (110, 210), in particular moisture-permeable layers (110, 210). The peripheral frames (120, 220) comprise one or more connecting elements (140, 240; 152) and the connecting elements (140, 240; 152) of adjacent stack plates are arranged in an interlocking manner.

## Description

### Technical Field

The invention relates to a stack plate device for a humidifier, in particular for a fuel cell system, a stack plate for a stack plate device as well as a humidifier for a fuel cell system with a stack plate device.

### Background Art

In a humidifier, water vapor from the exhaust air of a fuel cell system is transferred to the supply air with several flat semi-permeable layers, e.g. water-permeable membranes, connected in parallel to protect the fuel cell membrane from drying out. The flat semi-permeable layers are installed in a stack consisting of individual layers (stack plates, seals and semi-permeable layers). A single stack can consist of a plurality of stack plates installed in a housing.

DE102017201814A1 discloses a humidifier for humidifying process gas for fuel cells. The flow plate comprises a first plate surface with first channel structures for gas guidance, a second plate surface with second channel structures for gas guidance and passage openings for guiding gas through the flow plate. The flow plate is characterized by a bead surrounding the first channel structures on the first plate surface and by a groove surrounding the second channel structures on the second plate surface.

US 2017/0279138 A1 discloses a humidifier comprising a first end plate comprising first alignment features, a second end plate comprising second alignment features, at least one sealing plate comprising a first porous media overmolded with an elastomer seal and the elastomer seal including alignment holes. The humidifier further comprises at least one first and one second inlet transfer plate comprising a second porous media overmolded with a polymer frame having inlets and outlets for allowing a flow of liquid or gas in a first or second direction on one side of the porous media, wherein the polymer frame include mating features for mating with the first alignment features, the alignment holes, or the second alignment features. The alignment holes in the sealing plate act as a mating feature with the first alignment features, the second alignment features, the first mating features, and the second mating features.

### Summary

It is an object of the invention to provide a stack plate device for a humidifier, in particular for a fuel cell system, with improved assembly features.

Another object is to provide a stack plate for a stack plate device with improved assembly features.

Another object is to provide a humidifier for a fuel cell system with a stack plate device with improved assembly features.

According to an aspect of the invention the object is achieved by a stack plate device for a humidifier, in particular for a fuel cell system, having a plurality of first and second stack plates being stacked one on top of each other alternately in a stacking direction, with top sides of first stack plates facing bottom sides of second stack plates and top sides of second stack plates facing bottom sides of first stack plates, and each stack plate comprising a peripheral frame that encloses a through-opening and has an inflow region and an outflow region, wherein at least first and second groups of flow channels are formed in the stacked stack plates, the flow channels being formed transversely to one another and being separated by semipermeable layers, in particular moisture-permeable layers, wherein three of the alternately successive first and second stack plates each enclose two of the flow channels, the channels providing a cross flow arrangement for a first and second fluid, wherein the first and/or second stack plates comprise a grid-like support member, and wherein the peripheral frames comprise one or more connecting elements and the connecting elements of adjacent stack plates are arranged in an interlocking manner.

According to a further aspect of the invention the further object is achieved by a stack plate for a stack plate device for a humidifier, in particular for a fuel cell system, comprising a circumferential frame that encloses a through-opening and has on the frame a support surface for a semi-permeable layer that spans the opening and covers it completely, wherein the semi-permeable layer is arranged on a bottom side or a top side of the frame with respect to an intended stacking direction in the stack plate device, wherein the peripheral frame comprises one or more connecting elements protruding from the peripheral frame in a stacking direction.

According to a further aspect of the invention the further object is achieved by a humidifier for a fuel cell system, having a housing that has at least one inlet for a first fluid, in particular exhaust gas from the fuel cell system, an inlet for a second fluid, in particular supply air to the fuel cell system, an outlet for the first fluid and an outlet for the second fluid, further comprising a stack plate device, in which a plurality of first and second stack plates being stacked one on top of each other alternately in a stacking direction is arranged,

wherein three of the alternately successive first and second stack plates each enclose a first and a second group of flow channels, the channels providing a cross flow arrangement for the first and second fluid, wherein the first group of flow channels are arranged between the inlet and the outlet for the first fluid and the second group of flow channels are arranged between the inlet and the outlet for the second fluid, wherein the peripheral frames comprise one or more connecting elements and the connecting elements of adjacent stack plates are arranged in an interlocking manner.

Advantageous embodiments are described in the dependent claims, the description and the drawings.

According to an aspect of the invention a stack plate device for a humidifier, in particular for a fuel cell system, is proposed, having a plurality of first and second stack plates being stacked one on top of each other alternately in a stacking direction, with top sides of first stack plates facing bottom sides of second stack plates and top sides of second stack plates facing bottom sides of first stack plates, and each stack plate comprising a peripheral frame that encloses a through-opening and has an inflow region and an outflow region. At least first and second groups of flow channels are formed in the stacked stack plates, the flow channels being formed transversely to one another and being separated by semi-permeable layers, in particular moisture-permeable layers, wherein three of the alternately successive first and second stack plates each enclose two of the flow channels, the channels providing a cross flow arrangement for a first and second fluid. The first and/or second stack plates comprise a grid-like support member. The peripheral frames comprise one or more connecting elements and the connecting elements of adjacent stack plates are arranged in an interlocking manner.

In the proposed stack plate device thin stack plates, preferably injection molded from polypropylene (PP), are sealed against each other by a soft seal, e.g. an O-ring or a molded gasket with a diameter 1 mm and a Shore hardness of 40 ShA. The resulting sealing forces are transmitted from one stack layer to the other by axially acting nubs as first connecting elements, thus preventing excessive deflection of the thin and flexible stack plates under sealing and compressive forces. An indentation on the opposite side of the adjacent stack plate ensures centering of the stacked stacking plates and a depth stop. The adjustable height is composed exclusively of tool-related dimensions that can be easily checked and adjusted. This makes it possible to control the setting tolerances when stacking hundreds of stacking plates on top of each other. This type of connecting elements is particularly advantageous for achieving a form and friction fit, especially in the case of low overall heights. When assembling stacking plate pairs, the nubs provide an advantageous local force introduction. After a pair of stacking plates has been joined, the forces are internally balanced and in equilibrium with the reaction force of the molded gasket or O-ring. Furthermore, the number and spacing of the nubs can compensate for or absorb different stiffnesses, e.g. higher or lower gasket reaction forces.

The semi-permeable layer separates the exhaust gas flow channel from the supply air flow channel. The semipermeable layer can be designed, for example, as a PFSA (perfluorosulfonic acid) membrane. Such membranes are also commonly used as proton exchange membranes. The membrane is airtight but permeable to moisture.

The semi-permeable layer may be bonded to the frame by means of a bond, so that the actually gas-tight diaphragm is tightly connected to the stack plate in the area of its outer frame.

The frame of the stack plate can preferably be formed from plastic, for example, PP (Polypropylen), PA6.6 (polyamide), PPA (polyphtalamide), PPS (polyphenylene sulfide), or TPX (polymethylpentene).

Advantageously gas-tight flow channels separated from each other in an extremely small installation space in a process-safe manner may be achieved, with the additional integration of a flat semi-permeable layer like a water-permeable membrane. With regard to a favorable water transfer rate, it is advantageous to represent as many channels as possible. This results in the smallest possible channel height.

In contrast to known solutions, the compression of the seal, which is decisive for tightness, can be ensured in a defined manner in various positions. After pre-assembly, the stack is secured for operation by rigid end plates and several screw connections. The positive locking of the spacer nubs minimizes further settling of the composite and thus ensures that the channel height, which is important for pressure loss and water transfer, does not change.

Advantageously a cost-effective production, as well as process reliability may be achieved in manufacturing the stack plate device and the humidifier. Various forms of grid-like support members for turbulence generation can be easily inserted. The separation of functions, such as bonding, sealing, holding, allows for improved design and process control. Due to the force- and form-fit, a self-supporting and rigid structure results, already after the first stack layers, which is advantageous for further handling. Complex and expensive gluing of the frame structure may be avoided.

According to a favorable embodiment of the stack plate device, the frame of the respective first stack plate may have opposing first front sides and opposing first longitudinal sides with a plurality of first connecting elements, the first longitudinal sides defining inflow and/or outflow regions of the first group of flow channels. The frame of the respective second stack plate may have opposing second front sides and opposing second longitudinal sides with a plurality of first connecting elements, the second front sides defining inflow and/or outflow regions of the second group of flow channels. Further,

the first connecting elements may be connected to corresponding first connecting elements when first and second stack plates are stacked one on top of each other. Advantageously, the connecting elements may be placed on the frames of the stack plates on front sides and longitudinal sides for a beneficial introduction of forces for sealing the stack plates to each other.

According to a favorable embodiment of the stack plate device, the first connecting elements of one of the first and second stack plates may be configured for setting a defined distance between the first and second stack plates when being connected to the other of the first connecting elements of an adjacent one of the first and second stack plates. The first connecting elements of the other one of the first and second stack plates may be configured for form and friction locking when being connected to the other of the first connecting elements of an adjacent one of the first and second stack plate. Thus, a height of the stacked stack plates may favorably be controlled as well as fixed composite of stack plates may be achieved due to form and friction locking of the connecting elements.

According to a favorable embodiment of the stack plate device, the first connecting elements may be formed as nubs on one of the first and second sides of the frame and as receptacles on the other of the first and second sides. In particular, the first connecting elements on first front sides of the first stack plate may be formed as a receptacle on the top side and a nub on the bottom side, whereas the first connecting elements on first longitudinal sides may be each formed as a nub on the top side of the frame and as a receptacle on the bottom side. The first connecting elements on second front sides of the second stack plate may be formed as a nub on the top side of the frame and as a receptacle on the bottom side, whereas the first connecting elements on second longitudinal sides may be each formed as a receptacle on the top side and a nub on the bottom side. Advantageous stacking and joining of the stack plates on top of each other may be achieved, resulting in an efficient mounting process for the stack plate device.

According to a favorable embodiment of the stack plate device, the semipermeable layer may be arranged, with respect to the stacking direction, on the bottom side of the stack plates in the case of the first or second stack plates and on the top side of the stack plates in the case of the second or first stack plates. Thus, flow channels may be realized in an appropriate manner for a beneficial pressure control of the flowing fluids.

According to a favorable embodiment of the stack plate device, the grid-like support element may be placed on the respective first and/or second stack plate. In particular, the grid-like support element may be glued to the frame, may be molded to the frame or may be integrally formed with the frame. Alternatively, the support element can also be inserted floatingly into the frame.

The stack seals between the exhaust gas and supply air sides in each layer. Since there is a pressure difference between the supply air and exhaust gas sides, the stack layers may favorably be able to absorb the resulting forces and also additionally support the thin and fragile flat semi-permeable layer with the aid of a grid-like support member. The grid structure of the grid-like support member has the additional function of guiding the fluids as a turbulence insert to the diaphragm of the semi-permeable layer.

According to a favorable embodiment of the stack plate device, the grid-like support elements on the first stack plates may be formed differently from those on the second stack plates, in particular differ in height and/or thread spacing and/or crossing angle. This may be favorable, since there is a pressure difference between the supply air and exhaust gas sides. The flow channel of the supply air normally has a higher pressure.

According to a favorable embodiment of the stack plate device, successive first and second stack plates may be connected to one another in a fluid-tight manner in regions outside the inflow or outflow regions, wherein a first gasket may be provided on the top side of the frame of the first stack plate on the front sides and a second gasket may be provided on the top side of the frame of the second stack plate on the longitudinal sides or vice versa. In particular, the first and second gasket may be arranged on the front sides or longitudinal sides of the frame between receptacles of the first connecting elements. Thus, the stack of stacked stack plates may favorably seal between the exhaust gas and supply air sides in each layer.

According to a favorable embodiment of the stack plate device, the first and second stack plates comprise through holes arranged in the frames as a feed through for tie rods, in particular in corner regions of the frames, being coaxial when the stack plates are stacked on top of each other. In the first or the second stack plates the through holes may be provided with circumferential second connecting elements, wherein the second connecting elements may be configured with a plurality of axially protruding fingers reaching through the through hole of the next stack plate of the second or first stack plates to interlock with corresponding recesses between axially protruding fingers of the second connecting elements of the following stack plate of the first or second stack plate. The second connecting elements may be configured for form and friction locking with each other. Advantageously, the second through hole may be configured with an oversize fit for accommodating the second connecting elements. A press connection in the area of the through holes may prevent the stack plates from folding away under the sealing force during assembly. After assembly, the seals may be secured by axially screwed end plates, so that the press connections are relieved during operation and may not loosen.

According to a favorable embodiment of the stack plate device, the first and second gasket may be arranged circumferentially around the through hole, extending in end pieces to an outer edge of the frame of the first and/or second stack plate. Thus, the through hole for screwing the stack plates together in order to assemble the stack plate device may be sealed in a reliable manner.

According to a favorable embodiment of the stack plate device, an incision may be arranged in a projection of the through hole to the outer edge of the frame of the first and second stack plate, the incision provided with the end pieces of the gasket ending on both sides of the incision, wherein a termination profile may be arranged at the incision for sealing the end pieces of the gasket, in particular, wherein the termination profile is glued to the frames of the first and second stack plate. Advantageously, potential cross leakage at the corners of the stack plates may be prevented by a tightly glued termination profile. The termination profile may be configured as a U-profile. When bonding the termination profile, front faces of the end pieces of the gasket are also sealed tightly with an adhesive. Additionally, before gluing, there is a possibility to check whether the seals have been mounted correctly and completely.

According to a further aspect of the invention a stack plate for a stack plate device for a humidifier, in particular for a fuel cell system, is proposed, comprising a circumferential frame that encloses a through-opening and has on the frame a support surface for a semi-permeable layer that spans the opening and covers it completely. The semi-permeable layer is arranged on a bottom side or a top side of the frame with respect to an intended stacking direction in the stack plate device. The peripheral frame comprises one or more connecting elements protruding from the peripheral frame in a stacking direction.

The semi-permeable layer separates the exhaust gas flow channel from the supply air flow channel. The semipermeable layer can be designed, for example, as a PFSA (perfluorosulfonic acid) membrane. Such membranes are also commonly used as proton exchange membranes. The membrane is airtight but permeable to moisture.

The semi-permeable layer may be bonded to the frame by means of a bond, so that the actually gas-tight diaphragm is tightly connected to the stack plate in the area of its outer frame. The semi-permeable layer can alternatively be connected to the frame by film back molding or overmolding.

The frame of the stack plate can preferably be formed from plastic, for example, PP (Polypropylen), PA6.6 (polyamide), PPA (polyphtalamide), PPS (polyphenylene sulfide), or TPX (polymethylpentene).

According to a favorable embodiment of the stack plate, the frame may have front sides and longitudinal sides with a plurality of first connecting elements for connecting to a stack plate adjacent in the stack plate device as intended, the longitudinal sides or the front sides defining inflow and/or outflow regions. Advantageously, the connecting elements may be placed on the frames of the stack plates on front sides and longitudinal sides for a beneficial introduction of forces for sealing the stack plates to each other.

According to a favorable embodiment of the stack plate, the first connecting elements may be configured for setting a defined distance, when being connected to the first connecting elements of an adjacent stack plate. Alternatively, the first connecting elements of the stack plate may be configured for form and friction locking, when connected to the first connecting elements of an adjacent stack plate. Thus, a height of the stacked stack plates may favorably be controlled as well as fixed composite of stack plates may be achieved due to form and friction locking of the connecting elements.

According to a favorable embodiment of the stack plate, the first connecting elements may be formed as a nub on the top side of the frame and as a receptacle on the bottom side or as a receptacle on the top side and a nub on the bottom side. Advantageously, a tight connection between stack plates stacked one on top of each other may be achieved.

According to a favorable embodiment of the stack plate, a gasket may be provided on the top side of the frame on the front sides, or on the longitudinal sides. In particular, the gasket may be arranged on the front sides or on the longitudinal sides between receptacles of the first connecting elements. Thus, a stack of stacked stack plates may favorably seal between the exhaust gas and supply air sides in each layer.

According to a favorable embodiment, the stack plate may comprise at least one through hole arranged in the frame as a feed through for tie rods, in particular at corners of the frame, wherein the at least one through hole may be provided with circumferential second connecting elements. The second connecting elements may be configured with a plurality of axially protruding fingers to interlock with corresponding recesses of axially protruding fingers of an after next neighboring stack plate when stack plates are stacked on top of each other. The second connecting elements may be configured for form and friction locking with each other. Alternatively, the stack plate may comprise a second through hole arranged in the frame, being coaxial with a through hole of a neighboring stack plate, the second through hole encompassing second connecting elements of the neighboring stack plate. A press connection in the area of the through holes may prevent the stack plates from folding away under the sealing force during assembly. After assembly, the seals may be secured by axially screwed end plates, so that the press connections are relieved during operation and may not loosen.

According to a favorable embodiment of the stack plate, the gasket may be arranged in a circumferential way around the through holes, extending in end pieces to an outer edge of the frame. Thus, the through holes for screwing the stack plates together in order to assemble the stack plate device may be sealed in a reliable manner.

According to a favorable embodiment of the stack plate, an incision may be arranged in a projection of the through hole to the outer edge of the frame, the incision provided with the end pieces of the gasket ending on both sides of the incision, wherein a termination profile may be arranged at the incision for sealing the end pieces of the gasket, in particular, wherein the termination profile is glued to the frame. Advantageously, potential cross leakage at the corners of the stack plates may be prevented by a tightly glued termination profile. The termination profile may be configured as a U-profile. Additionally, before gluing, there is a possibility to check whether the seals have been mounted correctly and completely.

According to an aspect of the invention a humidifier for a fuel cell system is proposed, having a housing that has at least one inlet for a first fluid, in particular exhaust gas from the fuel cell system, an inlet for a second fluid, in particular supply air to the fuel cell system, an outlet for the first fluid and an outlet for the second fluid. The humidifier further comprises a stack plate device, in which a plurality of first and second stack plates are stacked one on top of each other alternately in a stacking direction is arranged, wherein three of the alternately successive first and second stack plates each enclose a first and a second group of flow channels, the flow channels providing a cross flow arrangement for the first and second fluid. The flow channels are separated by semi-permeable layers, in particular moisture-permeable layers. The first group of flow channels are arranged between the inlet and the outlet for the first fluid and the second group of flow channels are arranged between the inlet and the outlet for the second fluid. The peripheral frames comprise one or more connecting elements and the connecting elements of adjacent stack plates are arranged in an interlocking manner.

The humidifier represents a flat membrane humidifier. A first, moist or water-rich fluid, for example exhaust gas from fuel cells, flows in one group of flow channels, while a second, dry fluid, for example supply air for the fuel cells, flows in another group of flow channels. The second dry fluid can be moistened by the first fluid via the semi-permeable membranes.

The stack plate device may be sealed in the housing via axially acting seals located respectively at the sides of the housing comprising the inlet side and outlet side of the first and second fluid.

The housing of the humidifier can be made of metal, for example aluminum. Alternatively, it is also possible that the housing is made of plastics, for example PPS, PPA (polyphtalamide), PA (polyamide).

### Brief Description of Drawings

The present invention together with the above-mentioned and other objects and advantages may best be understood from the following detailed description of the embodiments, but not restricted to the embodiments, wherein is shown in:
Figure 1 a humidifier, in particular for a fuel cell system, according to an embodiment of the invention, in an isometric view;
Figure 2 the humidifier according to Figure 1 without the fluid inlets and fluid outlets;
Figure 3 a frontal view of the humidifier according to Figure 1 without the fluid inlet for the first fluid;
Figure 4 a stack of four stack plates according to an embodiment of the invention, in an isometric view, with a first stack plate on top;
Figure 5 the stack according to Figure 4 without the first stack plate, with a view on a second stack plate with a grid-like support member on top;
Figure 6 a stack of two stacked stack plates according to an embodiment of the invention, in an isometric view, with a cut through first connecting elements;
Figure 7 a stack of three stacked stack plates according to an embodiment of the invention, in an isometric view, with a cut through first connecting elements;
Figure 8 a stack of four stacked stack plates according to an embodiment of the invention, in an isometric view, with a cut through first connecting elements;
Figure 9 a stack of three stacked stack plates according to an embodiment of the invention, in an isometric view, with a cut through through holes with second connecting elements;
Figure 10 a stack of four stacked stack plates according to an embodiment of the invention, in an isometric view, with a cut through through holes with second connecting elements;
Figure 11 a stack of three stacked stack plates according to an embodiment of the invention, in an isometric view, with a view to incisions on outer edges of the frames;
Figure 12 a stack of four stacked stack plates according to an embodiment of the invention, in an isometric view, with a view to incisions on outer edges of the frames; and
Figure 13 a stack of four stacked stack plates according to an embodiment of the invention, in an isometric view, with a view to a termination profile sealing incisions.

### Detailed Description

In the drawings, like elements are referred to with equal reference numbers. The drawings are merely schematic representations, not intended to portray specific parameters of the invention. Moreover, the drawings are intended to depict only typical embodiments of the invention and therefore should not be considered as limiting the scope of the invention.

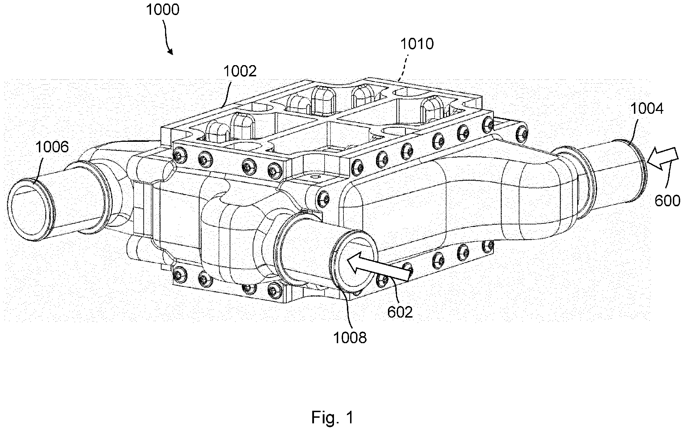

Figure 1 depicts a humidifier 1000, in particular for a fuel cell system, according to an embodiment of the invention, in an isometric view.

The humidifier 1000 has a housing 1002 that has at least one inlet 1004 for a first fluid 600, in particular exhaust gas from the fuel cell system, an inlet 1008 for a second fluid 602, in particular supply air to the fuel cell system, an outlet 1006 for the first fluid 600 and an outlet 1010 for the second fluid 602.

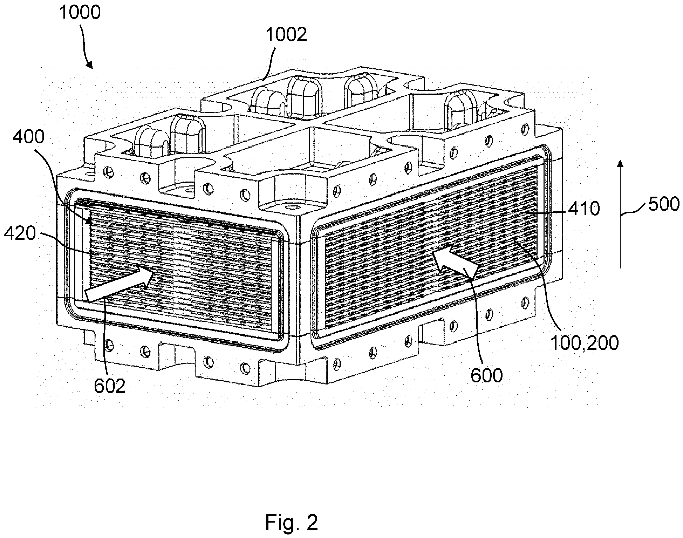

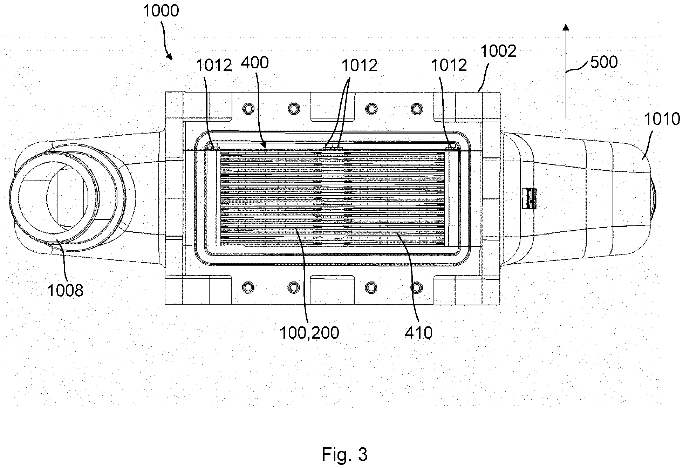

Figure 2 depicts the humidifier 100 according to Figure 1 without the fluid inlets 1004, 1008 and fluid outlets 1006, 1010. In Figure 3 a frontal view of the hum idifier 100 without the fluid inlet 1004 for the first fluid 600 is shown.

The humidifier 1000 comprises inside the housing 1002 a stack plate device 400, in which a plurality of first and second stack plates 100, 200 being stacked one on top of each other alternately in a stacking direction 500 is arranged.

As may be seen from Figures 2 and 3, a stack plate device 400 comprises a plurality of stack plates 100 stacked on top of each other.

Herein each three of the alternately successive first and second stack plates 100, 200 enclose a first and a second group of flow channels 410, 420. The flow channels 420, 410 provide a cross flow arrangement for the first and second fluid 600, 602 and are separated by semi-permeable layers (110, 210), in particular moisture-permeable layers (110, 210).

The first group of flow channels 410 is arranged between the inlet 1004 and the outlet 1006 for the first fluid 600 and the second group of flow channels 420 is arranged between the inlet 1008 and the outlet 1010 for the second fluid 602.

As may be seen from Figure 3, the stack plates 100, 200 are fixed and pressed together in the stack plate device 400 by tie rods 1012, which are mounted through through holes 150 in the stack plates 100, 200, particularly at the corner regions and/or longitudinal sides 124, 224 of frames 120, 220 of the stack plates 100, 200 that may be seen in the following Figures.

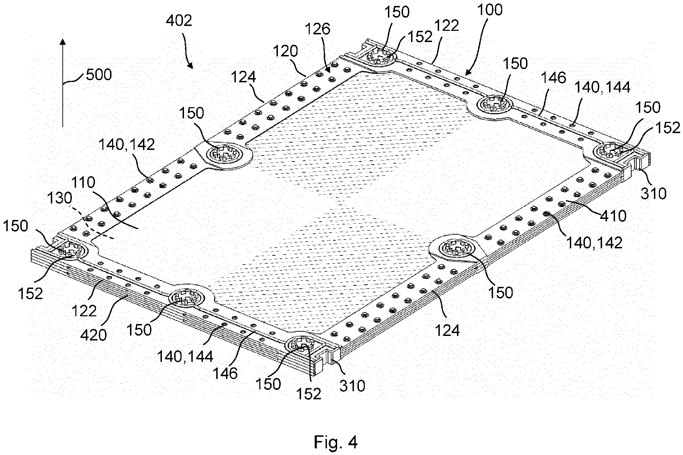

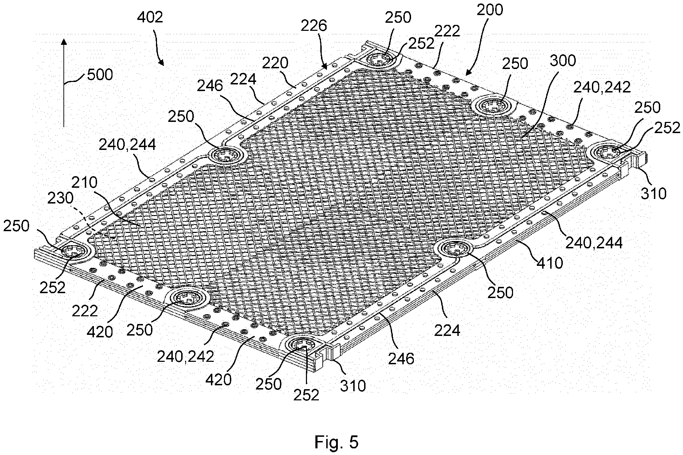

Figure 4 depicts a stack 402 of four stack plates 100, 200 according to an embodiment of the invention, in an isometric view, with a first stack plate 100 on top. Figure 5 depicts the stack 402 according to Figure 4 without the first stack plate 100, with a view on a second stack plate 200 with a grid-like support member 300 on top.

The stack 402 may be part of a stack plate device 400 for a humidifier 1000, in particular for a fuel cell system. The stack plate device 400 has a plurality of first and second stack plates 100, 200 being stacked one on top of each other alternately in a stacking direction 500. Herein top sides 126 of first stack plates 100 are facing bottom sides 225 of second stack plates 200 and top sides 226 of second stack plates 200 are facing bottom sides 125 of first stack plates 100. Each stack plate 100, 200 comprises a peripheral frame 120, 220 that encloses a through-opening 130, 230 and has an inflow region and an outflow region either on a front side 122, 222 or a longitudinal side 124, 224.

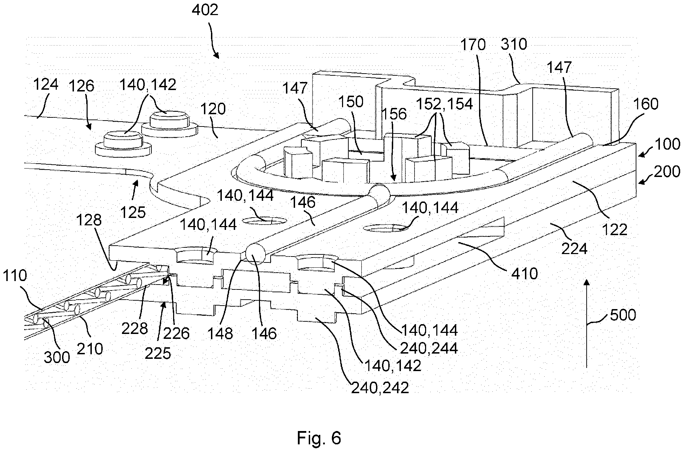

The frame 120, 220 has a support surface 128, 228, which may be seen in Figures 6 to 8, for a semi-permeable layer 110, 210 that spans the opening 130, 230 and covers it completely.

First and second groups of flow channels 410, 420 are formed in the stacked stack plates 100, 200, Flow channels 410, 420 are formed transversely to one another and are separated by semi-permeable layers 110, 210, in particular moisture-permeable layers 110, 210.

Each three of the alternately successive first and second stack plates 100, 200 enclose two of the flow channels 410, 420, the flow channels 410, 420 providing a cross flow arrangement for a first and second fluid 600, 602.

As shown in Figure 5, the second stack plates 200 comprises a grid-like support member 300.

The peripheral frames 120, 220 comprise one or more connecting elements 140, 240; 152 and the connecting elements 140, 240; 152 of adjacent stack plates are arranged in an interlocking manner. For clarity only some connecting elements 140, 240; 152 are marked in the Figures.

The frame 120 of the respective first stack plate 100 has opposing first front sides 122 and opposing first longitudinal sides 124 with a plurality of first connecting elements 140. The first longitudinal sides 124 define inflow and/or outflow regions of the first group of flow channels 410. The frame 220 of the respective second stack plate 200 has opposing second front sides 222 and opposing second longitudinal sides 224 with a plurality of first connecting elements 240. The second front sides 222 define inflow and/or outflow regions of the second group of flow channels 420.

The first connecting elements 140 are connected to corresponding first connecting elements 240 when first and second stack plates 100, 200 are stacked one on top of each other.

Successive first and second stack plates 100, 200 are connected to one another in a fluid-tight manner in regions outside the inflow or outflow regions. For this purpose, as may be seen in Figures 4 and 5, a first gasket 146 may be provided on the top side 126 of the frame 120 of the first stack plate 100 on the front sides 122 and a second gasket 246 may be provided on the top side 226 of the frame 220 of the second stack plate 100, 200 on the longitudinal sides 224. In particular, the first and second gasket 146, 246 may be arranged on the front sides 122, 222 or longitudinal sides 124, 224 of the frame 120, 220 between receptacles 144, 244 of the first connecting elements 140, 240.

Therefore, in the embodiment shown in Figures 4 and 5, the flow channels 410 on the first stack plates 100 are located between the longitudinal sides 124 of the frames 120, whereas the flow channels 420 on the second stack plates 200 are located between the front sides 222 of the frames 220.

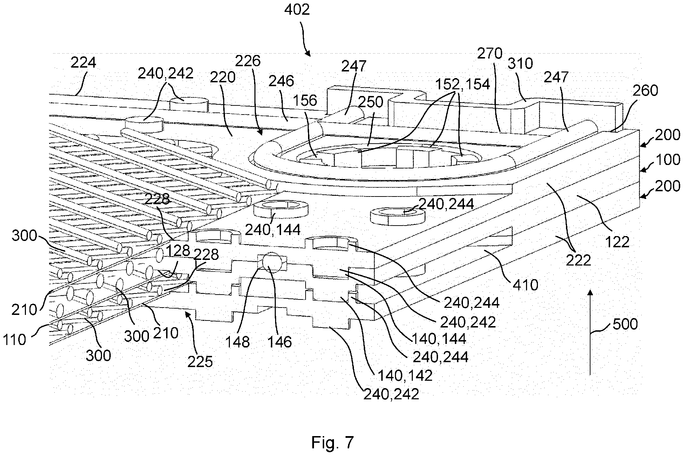

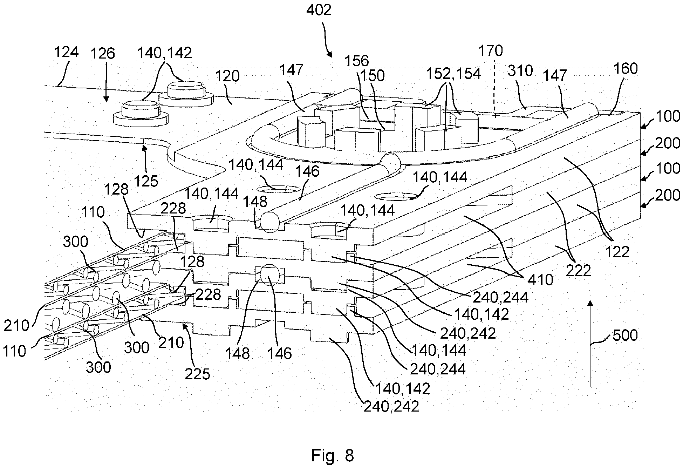

In the Figures 6, 7 and 8 stacks 402 of two, three and four stacked stack plates 100, 200, respectively, are depicted in an isometric view, each with a cut through first connecting elements 140, 240. In Figure 6 a first stack plate 100 represents the uppermost layer shown, in Figure 7 a second stack plate 200 and in Figure 8 again a first stack plate 100.

The first connecting elements 140, 240 are formed as nubs 142, 242 on one of the first and second sides 126, 226; 125, 225 of the frame 120, 220 and as receptacles 144, 244 on the other of the first and second sides 125, 225; 126, 226.

In the embodiment shown, the first connecting elements 140 on first front sides 122 of the first stack plate 100 are formed as a receptacle 144 on the top side 126 and a nub 142 on the bottom side 125, whereas the first connecting elements 140 on first longitudinal sides 124 are each formed as a nub 142 on the top side 126 of the frame 120 and as a receptacle 144 on the bottom side 125.

The first connecting elements 240 on second front sides 222 of the second stack plate 200 are formed as a nub 242 on the top side 226 of the frame 220 and as a receptacle 244 on the bottom side 225, whereas the first connecting elements 240 on second longitudinal sides 224 are each formed as a receptacle 244 on the top side 226 and a nub 242 on the bottom side 225.

Further, in the embodiment shown, the first connecting elements 140 of the first stack plates 100 are configured for setting a defined distance between the first and second stack plates 100, 200 when being connected to the first connecting elements 240 of an adjacent second stack plate 200. Thus, a height of the stacked stack plates 100, 200 may favorably be controlled as well as fixed composite of stack plates 100, 200 may be achieved due to form and friction locking of the first connecting elements 140, 240.

The first connecting elements 240 of the second stack plates 200 are configured for form and friction locking when being connected to the first connecting elements 140 of an adjacent first stack plate 100.

In other embodiments, the functions of defining distance and form and friction locking of the first connecting elements 140, 240 may be exchanged.

Further, in the embodiment shown, the semi-permeable layer 110 is arranged, with respect to the stacking direction 500, on support surfaces 128 of the bottom side 125 of the stack plates 100, 200 in the case of the first stack plates 100, 200 and on support surfaces 228 of the top side 226 of the stack plates 100, 200 in the case of the second stack plates 200, 100.

In Figure 6 a grid-like support element 300 is shown to be placed on the second stack plate 200, whereas in Figures 7 and 8 grid-like support elements 300 are shown to be placed on the first and the second stack plates 100, 200.

As shown, the grid-like support elements 300 on the first stack plates 100 may be formed differently from those on the second stack plates 200, in particular differ in height and/or thread spacing and/or crossing angle. This may be favorable, since there is a pressure difference between the supply air and exhaust gas sides. The flow channel 420 of the supply air normally has a higher pressure.

In particular, the grid-like support element 300 advantageously may be glued to the frame 120, 220, may be molded to the frame 120, 220, may be integrally formed with the frame 120, 220, or may be inserted floatingly into the frame 120, 220. In addition to a support function of the support element 300, a water transfer can also be optimized with an optimized shape of the support element 300.

Further, as may be seen from Figures 6 to 8, a through hole 150 is arranged in the frame 120 of the first stack plate 100 as a feed through for tie rods 1012, in particular in corner regions of the frame 120, 220.

The through hole 150 is provided with circumferential second connecting elements 152. The second connecting elements 152 are configured with a plurality of axially protruding fingers 154 to interlock with corresponding recesses 156 between axially protruding fingers 154 of the second connecting elements 152 of a next neighboring first stack plate 100 when first and the second stack plates 100, 200 are stacked on top of each other.

The second connecting elements 152 may favorably be configured for form and friction locking with each other.

A second through hole 250 is arranged in the second stack plates 200 encompassing the second connecting elements 152 of neighboring first stack plates 100. The second through holes 250 of the second stack plates 200 are coaxial with the through holes 150 of the first stack plates 100.

The first and second gasket 146, 246 are arranged circumferentially around the through holes 150, 250, extending in end pieces 147, 247 to an outer edge 160, 260 of the frame 120, 220 of the first and/or second stack plate 100, 200.

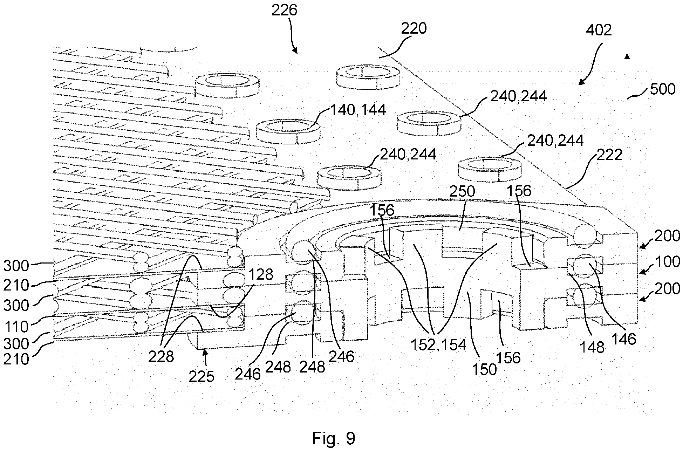

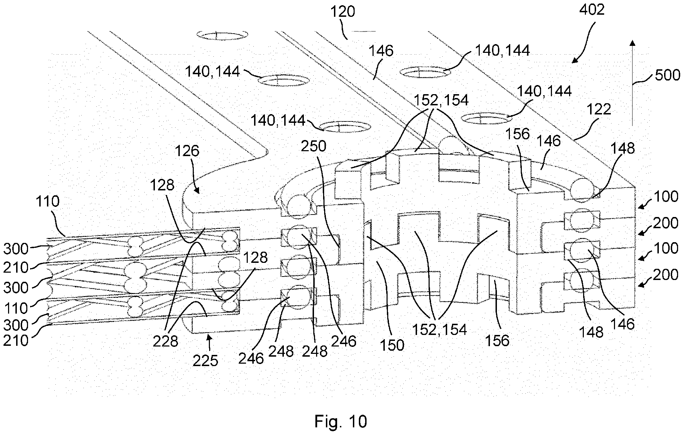

Functioning of the second connecting elements 152 may better be understood from Figures 9 and 10.

Figure 9 depicts a stack 402 of three stacked stack plates 100, 200, in an isometric view, with a cut through through holes 150, 250 with second connecting elements 152, whereas in Figure 10 a stack 402 of four stacked stack plates 100, 200 is shown.

The through holes 150, 250 are arranged in the frame 120 of the first stack plate 100 as a feed through for tie rods 1012, in particular in corner regions of the frame 120, 220. The through hole 150 is provided with circumferential second connecting elements 152.

Particularly in Figure 10, it is recognizable, how the second connecting elements 152 are configured with a plurality of axially protruding fingers 154 to interlock with corresponding recesses 156 of the axially protruding fingers 154 of an after next neighboring stack plate 100 when the stack plates 100, 200 are stacked on top of each other.

Favorably, the second connecting elements 152 may be configured for form and friction locking with each other.

The second connecting elements 152 are accommodated in the through holes 250 of neighboring second stack plates 200 in the stack 402.

Advantageously, the second through hole 250 may be configured with an oversize fit for accommodating the second connecting elements 152. A press connection in the area of the through holes 150, 250 may prevent the stack plates 100, 200 from folding away under the sealing force during assembly. After assembly, the seals may be secured by axially screwed end plates, so that the press connections are relieved during operation and may not loosen.

The gasket 146, 246 is arranged in a circumferential way around the through holes 150, 250, extending in end pieces 147, 247 to an outer edge 160, 260 of the frames 120, 220.

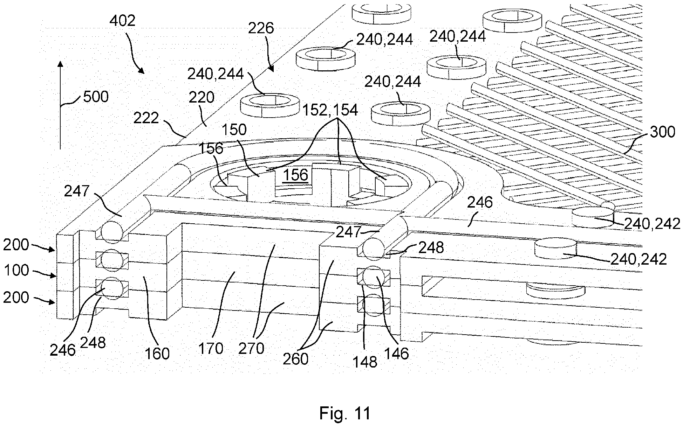

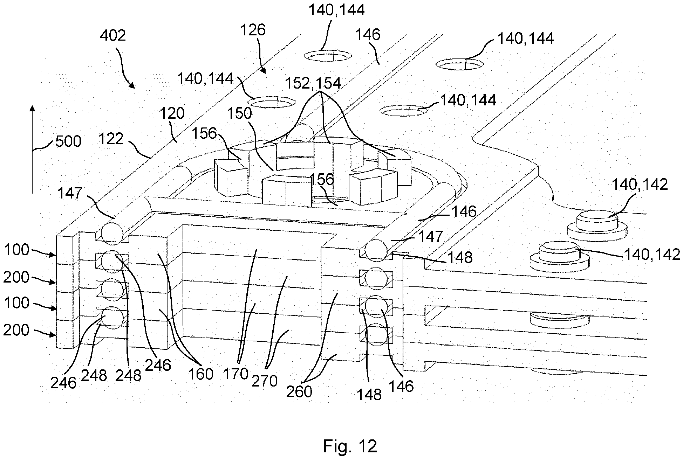

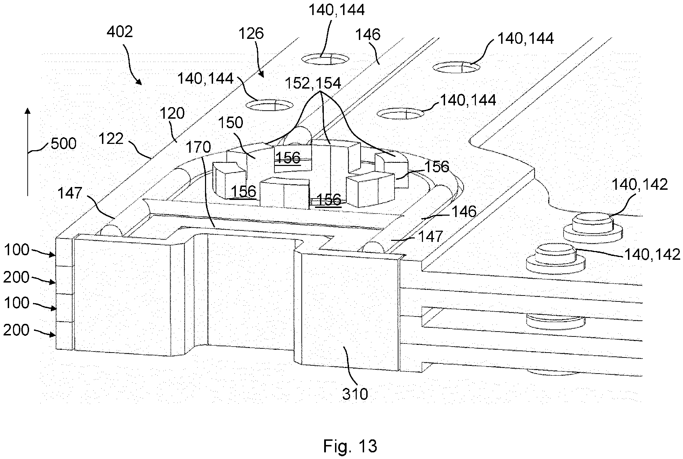

Figure 11 depicts a stack 402 of three stacked stack plates 100, 200, in an isometric view, with a view to incisions 170, 270 on outer edges 160, 260 of the frames 120, 220. Figure 12 depicts the stack 402 with four stacked stack plates 100, 200, whereas in Figure 13 the stack 402 is shown with a view to a termination profile 310 sealing the incisions 170, 270.

An incision 170, 270 is arranged in a projection of the through holes 150, 250 to the outer edges 160, 260 of the frames 120, 220 of the first and second stack plates 100, 200. The incision 170, 270 is provided with the end pieces 147, 247 of the gasket 146, 246 ending on both sides of the incision 170, 270. For sealing the end pieces 147, 247 of the gasket 146, 246, favorably, a termination profile 310, configured as a U-profile, and an adhesive may be arranged at the incision 170, 270. In particular, the termination profile 310 may be glued to the frames 120, 220 of the first and second stack plate 100, 200 in order to assure the sealing effect.

### Reference Numbers

- 100: first stack plate
- 110: semi-permeable layer
- 120: first frame
- 122: front side
- 124: longitudinal side
- 125: bottom side
- 126: top side
- 128: support surface
- 130: opening
- 140: first connecting element
- 142: nub
- 144: receptacle
- 146: gasket
- 147: end piece
- 148: groove
- 150: through hole
- 152: second connecting element
- 154: finger
- 156: recess
- 160: outer edge
- 170: incision
- 200: second stack plate
- 210: semi-permeable layer
- 220: first frame
- 222: front side
- 224: longitudinal side
- 225: bottom side
- 226: top side
- 228: support surface
- 230: opening
- 240: first connecting element
- 242: nub
- 244: receptacle
- 246: gasket
- 247: end piece
- 248: groove
- 250: through hole
- 260: outer edge
- 270: incision
- 300: grid-like support member
- 310: termination profile
- 400: stack plate device
- 402: stack
- 410: flow channel
- 420: flow channel
- 430: seal
- 432: receptacle
- 500: stacking direction
- 600: first fluid (exhaust gas)
- 602: second fluid (supply air)
- 1000: humidifier
- 1002: housing
- 1004: inlet first fluid
- 1006: outlet first fluid
- 1008: inlet second fluid
- 1010: outlet second fluid
- 1012: tie rod

## Claims

1. A stack plate device (400) for a humidifier (1000), in particular for a fuel cell system, the stack plate device (400) comprising a plurality of first and second stack plates (100, 200) being stacked one on top of each other alternately in a stacking direction (500), with top sides (126) of first stack plates (100) facing bottom sides (225) of second stack plates (200) and top sides (226) of second stack plates (200) facing bottom sides (125) of first stack plates (100), and each stack plate (100, 200) comprising a peripheral frame (120, 220) that encloses a through-opening (130, 230) and has an inflow region and an outflow region,
wherein at least first and second groups of flow channels (410, 420) are formed in the stacked stack plates (100, 200), the flow channels (410, 420) being formed transversely to one another and being separated by semi-permeable layers (110, 210), in particular moisture-permeable layers (110, 210),
wherein three of the alternately successive first and second stack plates (100, 200) each enclose two of the flow channels (410, 420), the channels (410, 420) providing a cross flow arrangement for a first and second fluid (600, 602),
wherein the first and/or second stack plates (100, 200) comprise a grid-like support member (300), and
wherein the peripheral frames (120, 220) comprise one or more connecting elements (140, 240; 152) and the connecting elements (140, 240; 152) of adjacent stack plates are arranged in an interlocking manner.

2. The stack plate device according to claim 1, wherein the frame (120) of the respective first stack plate (100) has opposing first front sides (122) and opposing first longitudinal sides (124) with a plurality of first connecting elements (140), the first longitudinal sides (124) defining inflow and/or outflow regions of the first group of flow channels (410),
wherein the frame (220) of the respective second stack plate (200) has opposing second front sides (222) and opposing second longitudinal sides (224) with a plurality of first connecting elements (240), the second front sides (222) defining inflow and/or outflow regions of the second group of flow channels (420), and
wherein the first connecting elements (140) are connected to corresponding first connecting elements (240) when the first and second stack plates (100, 200) are stacked one on top of each other.

3. The stack plate device according to claim 1 or 2, wherein the first connecting elements (140, 240) of one of the first and second stack plates (100, 200) are configured for setting a defined distance between the first and second stack plates (100, 200) when being connected to the other of the first connecting elements (140, 240) of an adjacent one of the first and second stack plates (100, 200), and
wherein the first connecting elements (140, 240) of the other one of the first and second stack plates (100, 200) are configured for form and friction locking when being connected to the other of the first connecting elements (140, 240) of an adjacent one of the first and second stack plate (100, 200).

4. The stack plate device according to any one of the preceding claims, wherein the first connecting elements (140, 240) are formed as nubs (142, 242) on one of the first and second sides (126, 226; 125, 225) of the frame (120, 220) and as receptacles (144, 244) on the other of the first and second sides (125, 225; 126, 226),
in particular, wherein the first connecting elements (140) on first front sides (122) of the first stack plate (100) are formed as a receptacle (144) on the top side (126) and a nub (142) on the bottom side (125), whereas the first connecting elements (140) on first longitudinal sides (124) are each formed as a nub (142) on the top side (126) of the frame (120) and as a receptacle (144) on the bottom side (125), and
wherein the first connecting elements (240) on second front sides (222) of the second stack plate (200) are formed as a nub (242) on the top side (226) of the frame (220) and as a receptacle (244) on the bottom side (225), whereas the first connecting elements (240) on second longitudinal sides (224) are each formed as a receptacle (244) on the top side (226) and a nub (242) on the bottom side (225).

5. The stack plate device according to any one of the preceding claims, wherein the semi-permeable layer (110, 210) is arranged, with respect to the stacking direction (500), on the bottom side (125, 225) of the stack plates (100, 200) in the case of the first or second stack plates (100, 200), and on the top side (126, 226) of the stack plates (100, 200) in the case of the second or first stack plates (200, 100).

6. The stack plate device according to any one of the preceding claims, wherein the grid-like support element (300) is placed on the respective first and/or second stack plate (100, 200), in particular wherein the grid-like support element (300) is glued to the frame (120, 220), is molded to the frame (120, 220), is integrally formed with the frame (120, 220) or is inserted floatingly into the frame (120, 220).

7. The stack plate device according to any one of the preceding claims, wherein the grid-like support elements (300) on the first stack plates (100) are formed differently from those on the second stack plates (200), in particular differ in height and/or thread spacing and/or crossing angle.

8. The stack plate device according to any one of the preceding claims, wherein successive first and second stack plates (100, 200) are connected to one another in a fluid-tight manner in regions outside the inflow or outflow regions,
wherein a first gasket (146) is provided on the top side (126) of the frame (120) of the first stack plate (100) on the front sides (122), and a second gasket (246) is provided on the top side (226) of the frame (220) of the second stack plate (100, 200) on the longitudinal sides (224) or vice versa, and
in particular, wherein the first and second gasket (146, 246) are arranged on the front sides (122, 222) or longitudinal sides (124, 224) of the frame (120, 220) between receptacles (144, 244) of the first connecting elements (140, 240).

9. The stack plate device according to any one of the preceding claims, wherein the first and second stack plates (100, 200) comprise through holes (150, 250) arranged in the frames (120, 220) as a feed through for tie rods (1012), in particular in corner regions of the frames (120, 220), being coaxial when the stack plates (100, 200) are stacked on top of each other,
wherein in the first or the second stack plates (100, 200) the through hole (150) is provided with circumferential second connecting elements (152), wherein the second connecting elements (152) are configured with a plurality of axially protruding fingers (154) reaching through the through hole (250) of the next stack plate (200) of the second or first stack plates (200, 100) to interlock with corresponding recesses (156) between axially protruding fingers (154) of the second connecting elements (152) of the following stack plate (100) of the first or second stack plates (100, 200)on top, and wherein the second connecting elements (152) are configured for form and friction locking with each other.

10. The stack plate device according to claim 9, wherein the first and second gasket (146, 246) are arranged circumferentially around the through holes (150, 250), extending in end pieces (147, 247) to an outer edge (160, 260) of the frame (120, 220) of the first and/or second stack plate (100, 200).

11. The stack plate device according to claim 10, wherein an incision (170, 270) is arranged in a projection of the through hole (150, 250) to the outer edge (160, 260) of the frame (120, 220) of the first and second stack plate (100, 200), the incision (170, 270) provided with the end pieces (147, 247) of the gasket (146, 246) ending on both sides of the incision (170, 270), and
wherein a termination profile (310) is arranged at the incision (170, 270) for sealing the end pieces (147, 247) of the gasket (146, 246), in particular, wherein the termination profile (310) is glued to the frames (120, 220) of the first and second stack plate (100, 200).

12. A stack plate (100, 200) for a stack plate device (400) according to any one of the preceding claims, for a humidifier (1000), in particular for a fuel cell system, the stack plate (100, 200) comprising a circumferential frame (120, 220) that encloses a through-opening (130, 230) and comprises, on the frame (120, 220), a support surface (128, 228) for a semi-permeable layer (110, 210) that spans the opening (130, 230) and covers it completely,
wherein the semi-permeable layer (110, 210) is arranged on a bottom side (125, 225) or a top side (126, 226) of the frame (120, 220) with respect to an intended stacking direction (500) in the stack plate device (400) by bonding, film back molding or overmolding, and
wherein the peripheral frame (120, 220) comprises one or more connecting elements (140, 240; 152) protruding from the peripheral frame (120, 220) in a stacking direction (500).

13. The stack plate according to claim 12, wherein the frame (120, 220) has front sides (122, 222) and longitudinal sides (124, 224) with a plurality of first connecting elements (140, 240) for connecting to a stack plate (100, 200) adjacent in the stack plate device (400) as intended, the longitudinal sides (124, 224) or the front sides (122, 222) defining inflow and/or outflow regions.

14. The stack plate according to claim 12 or 13, wherein the first connecting elements (140, 240) are configured for setting a defined distance, when being connected to the first connecting elements (140, 240) of an adjacent stack plate (100, 200), or
wherein the first connecting elements (140, 240) of the stack plate (100, 200) are configured for form and friction locking, when connected to the first connecting elements (140, 240) of an adjacent stack plate (100, 200).

15. The stack plate according to claim 12 or 14, wherein the first connecting elements (140, 240) are formed as a nub (142, 242) on the top side (126, 226) of the frame (120, 220) and as a receptacle (144, 244) on the bottom side (125, 225), or as a receptacle (144, 244) on the top side (126, 226) and as a nub (142, 242) on the bottom side (125, 225).

16. The stack plate according to any one of the claims 12 to 15, wherein a gasket (146, 246) is provided on the top side (126, 226) of the frame (120, 220) on the front sides (122, 222), or on the longitudinal sides (124, 224), and
in particular, wherein the gasket (146, 246) is arranged on the front sides (122, 222), or on the longitudinal sides (124, 224) between receptacles (144, 244) of the first connecting elements (140, 240).

17. The stack plate according to any one of the claims 12 to 16, further comprising:
at least one through hole (150) arranged in the frame (120) as a feed through for tie rods (1012), in particular at corners of the frame (120), wherein the at least one through hole (150) is provided with circumferential second connecting elements (152), wherein the second connecting elements (152) are configured with a plurality of axially protruding fingers (154) to interlock with corresponding recesses (156) of axially protruding fingers (154) of an after next neighboring stack plate (100), when the stack plates (100, 200) are stacked on top of each other, and wherein the second connecting elements (152) are configured for form and friction locking with each other; or
a second through hole (250) arranged in the frame (220), being coaxial with a through hole (150) of a neighboring stack plate (100), the second through hole (250) encompassing second connecting elements (152) of the neighboring stack plate (100).

18. The stack plate according to claim 17, wherein the gasket (146, 246) is arranged in a circumferential way around the through holes (150, 250), extending in end pieces (147, 247) to an outer edge (160, 260) of the frame (120, 220).

19. The stack plate according to claim 18, wherein an incision (170, 270) is arranged in a projection of the through hole (150, 250) to the outer edge (160, 260) of the frame (120, 220), the incision (170, 270) provided with the end pieces (147, 247) of the gasket (146, 246) ending on both sides of the incision (170, 270), and
wherein a termination profile (310) is arranged at the incision (170, 270) for sealing the end pieces (147, 247) of the gasket (146, 246), in particular, wherein the termination profile (310) is glued to the frame (120, 220).

20. A humidifier (1000) for a fuel cell system, comprising: a housing (1002) that comprises at least one inlet (1004) for a first fluid (600), in particular exhaust gas from the fuel cell system, an inlet (1008) for a second fluid (602), in particular supply air to the fuel cell system, an outlet (1006) for the first fluid (600) and an outlet (1010) for the second fluid (602); and
a stack plate device (400) according to any one of the claims 1 to 11, in which a plurality of first and second stack plates (100, 200) according to any one of the claims 12 to 19, being stacked one on top of each other alternately in a stacking direction (500) is arranged,
wherein three of the alternately successive first and second stack plates (100, 200) each enclose a first and a second group of flow channels (410, 420), the flow channels (410, 420) providing a cross flow arrangement for the first and second fluid (600, 602), and the flow channels (410, 420) being separated by semi-permeable layers (110, 210), in particular moisture-permeable layers (110, 210),
wherein the first group of flow channels (410) are arranged between the inlet (1004) and the outlet (1006) for the first fluid (600), and the second group of flow channels (420) are arranged between the inlet (1008) and the outlet (1010) for the second fluid (602), and
wherein the peripheral frames (120, 220) comprise one or more connecting elements (140, 240; 152), and the connecting elements (140, 240; 152) of adjacent stack plates are arranged in an interlocking manner.
